# EUROPÄISCHE PATENTSCHRIFT

(11) **EP 2 861 942 B1**
(45) Veröffentlichungstag und Bekanntmachung des Hinweises auf die Patenterteilung: **21.02.2018**
(21) Anmeldenummer: 13737129.0
(22) Anmeldetag: 17.06.2013
(51) Int. Cl.: G01F 1/84

(54) **VERFAHREN ZUM BETREIBEN EINES RESONANZMESSSYSTEMS UND DIESBEZÜGLICHES RESONANZMESSSYSTEM**
METHOD OF OPERATING A RESONANCE MEASURING SYSTEM AND CORRESPONDING RESONANCE MEASURING SYSTEM
PROCÉDÉ D'OPÉRATION D'UN SYSTÈME DE MESURE À RÉSONANCE ET SYSTÈME DE MESURE À RÉSONANCE CORRESPONDANT

(30) Priorität: 18.06.2012 DE 102012011932
(43) Veröffentlichungstag der Anmeldung: 22.04.2015
(73) Patentinhaber: KROHNE Messtechnik GmbH, 47058 Duisburg (DE)
(72) Erfinder: KOLAHI, Kourosh, 47051 Duisburg (DE); STORM, Ralf, 45131 Essen (DE); POREMBA, Andreas, 42107 Wuppertal (DE)
(74) Vertreter: Gesthuysen Patent- und Rechtsanwälte
(86) Internationale Anmeldenummer: PCT/EP2013/001787
(87) Internationale Veröffentlichungsnummer: WO 2013/189586

(56) Entgegenhaltungen:
- EP-A2- 0 262 573
- WO-A2-2005/057131

## Beschreibung

Die Erfindung betrifft ein Verfahren zum Betreiben eines Resonanzmesssystems in Form eines Coriolis-Massedurchflussmessgeräts, wobei das Resonanzmesssystem wenigstens einen Regler, wenigstens eine elektrische Stelleinrichtung, wenigstens einen elektromagnetischen Antrieb als Schwingungserzeuger, wenigstens ein Schwingelement und wenigstens einen Schwingungsaufnehmer umfasst, wobei der Regler ein Reglerausgangssignal u₁ zur Ansteuerung der elektrischen Stelleinrichtung erzeugt, die elektrische Stelleinrichtung ein elektrisches Anregungssignal u₂ zur Anregung des elektromagnetischen Antriebs bereitstellt, der elektromagnetische Antrieb das Schwingelement zur Schwingung in wenigstens einer Eigenform anregt und wobei die angeregte Schwingung des Schwingelements von dem Schwingungsaufnehmer erfasst und als wenigstens ein Ausgangssignal y ausgegeben wird. Darüber hinaus betriff die Erfindung auch ein Resonanzmesssystem in Form eines Coriolis-Massedurchflussmessgeräts, mit dem das vorgenannte Verfahren ausführbar ist.

Resonanzmesssysteme der vorgenannten Art sind seit vielen Jahren bekannt, nicht nur in Form von Coriolis-Massedurchflussmessgeräten, sondern auch als Dichtemessgeräte oder Füllstandwächter nach dem Stimmgabel-Prinzip, als Quarzwagen und Bandviskosimeter u.a.m. Diese Resonanzmesssysteme stehen mit einem Prozess in Verbindung, wobei sich Prozess und Resonanzmesssystem wechselseitig beeinflussen.

Im Folgenden werden Resonanzmesssysteme am Beispiel von Coriolis-Massedurchflussmessgeräten behandelt. Als Resonanzmesssysteme werden vorliegend ganz allgemein solche Systeme bezeichnet, bei denen Informationen über die zu bestimmenden Prozessgrößen (Messgrößen) in den Eigenfrequenzen verschlüsselt sind und/oder solche Systeme, bei denen Arbeitspunkte auf die Eigenfrequenzen des Messsystems gelegt werden. Auf alle unter diese Definition fallenden Systeme sind die nachfolgenden Ausführungen anwendbar. Bei Coriolis-Massedurchflussmessgeräten entspricht das Messrohr dem Schwingelement des Resonanzmesssystems; auch diese besondere Ausgestaltung des Schwingelements stellt keine Einschränkung für die allgemein auf Resonanzmesssysteme anwendbare Lehre dar.

Als Coriolis-Massedurchflussmessgeräte ausgebildete Resonanzmesssysteme werden vor allem in der industriellen Prozessmesstechnik dort eingesetzt, wo mit hoher Genauigkeit Masseströme bestimmt werden müssen. Die Funktionsweise von Coriolis-Massedurchflussmessgeräten beruht darauf, dass wenigstens ein von einem Medium durchströmtes Messrohr - das Schwingelement - von einem Schwingungserzeuger zu einer Schwingung angeregt wird, wobei dieser Schwingungserzeuger vorraussetzungsgemäß ein elektromagnetischer Antrieb ist. Bei einem solchen elektromagnetischen Antrieb wird üblicherweise eine Spule von einem elektrischen Strom durchflossen, wobei mit dem Spulenstrom unmittelbar eine Kraftwirkung auf das Schwingelement verbunden ist. Bei Coriolis-Massedurchflussmessgeräten beruht die Funktionsweise darauf, dass das massebehaftete Medium aufgrund der durch zwei orthogonale Bewegungen - die der Strömung und die des Messrohres - hervorgerufene Coriolis-Trägheitskraft auf die Wandung des Messrohres rückwirkt. Diese Rückwirkung des Mediums auf das Messrohr führt zu einer Änderung der Messrohrschwingung im Vergleich zu dem undurchströmten Schwingungszustand des Messrohres. Durch Erfassung dieser Besonderheiten der Schwingungen des durchströmten Coriolis-Messrohrs kann der Massedurchfluss durch das Messrohr mit hoher Genauigkeit bestimmt werden.

Von besonderer Bedeutung sind die Eigenfrequenzen des Coriolis-Massedurchflussmessgeräts bzw. der schwingfähigen Teile des Coriolis-Massedurchflussmessgeräts, im Wesentlichen also die Eigenfrequenzen des Messrohrs als Schwingelement, weil die Arbeitspunkte des Coriolis-Massedurchflussmessgerät üblicherweise auf Eigenfrequenzen des Messrohres gelegt werden, um die erforderlichen Schwingungen für die Induktion der Corioliskräfte mit einem minimalen Energieaufwand einprägen zu können. Die dann von dem Messrohr ausgeführten Schwingungen weisen eine bestimmte Form auf, die als Eigenform der jeweiligen Anregung bezeichnet wird.

Aus dem Stand der Technik ist bekannt, dass zur Anregung des Schwingelements von dem Regler ein harmonisches Basissignal als Reglerausgangssignal in Form einer sinusförmigen Spannung erzeugt wird und diese sinusförmige Spannung die elektrische Stelleinrichtung ansteuert, wobei die elektrische Stelleinrichtung die Aufgabe hat, an ihrem Ausgang eine entsprechende Leistung zur Verfügung zu stellen, um den elektromagnetischen Antrieb in geeigneter Weise und mit ausreichender Leistung ansteuern zu können, die elektrische Stelleinrichtung ist damit praktisch das leistungsmäßige Bindeglied zwischen dem Regler und dem elektromagnetischen Antrieb des Resonanzmesssystems.

Der Regler dient dazu, das Schwingelement in Resonanz zu betreiben, wozu ermittelt werden muss, ob Eingangs- und Ausgangsgröße des Resonanzmesssystems die der Resonanz entsprechende Phasendifferenz aufweisen. Im Falle des Coriolis-Massedurchflussmessgerätes ist dies eingangsseitig die Kraft, mit der das Messrohr als Schwingelement angeregt wird und ist dies ausgangsseitig die Geschwindigkeit des Messrohres. Aufgrund der diesem schwingfähigen System zugrunde liegenden Zusammenhänge liegt eine Resonanz dann vor, wenn die eingangsseitige Kraftwirkung und die ausgangsseitige Messrohrgeschwindigkeit eine Phasendifferenz Δϕ von 0° aufweisen. Ist diese Phasenbedingung erfüllt, liegt die gewünschte Resonanz vor. Aus diesem Grund ist der Regelkreis zum Betreiben eines aus dem Stand der Technik bekannten und gattungsgemäßen Resonanzmesssystems ein Phasenregelkreis. Bei Coriolis-Massedurchflussmessgeräten zum Einsatz kommende Phasenregelkreise sind beispielsweise aus der EP 0 262 573 A1 und auch aus der WO 2005/057131 A2 bekannt.

Resonanzmesssysteme mit einem elektromagnetischen Antrieb weisen aufgrund des direkten Zusammenhangs zwischen dem Strom durch eine Antriebsspule des elektromagnetischen Antriebs und der dadurch bewirkten Kraftwirkung als elektrische Stelleinrichtung bzw. als Teil einer elektrischen Stelleinrichtung häufig eine spannungsgesteuerte Stromquelle auf, die eine große Bandbreite aufweisen muss und kaum zusätzliche Phasenverschiebungen im Frequenzarbeitsbereich bewirken darf. Die Phasenregelung beruht deshalb üblicherweise auf einer Phasenmessung zwischen der Messrohrgeschwindigkeit und der Ansteuerspannung der elektrischen Stelleinrichtung mit der Annahme, dass der Einfluss der Stelleinrichtung und/oder des elektromagnetischen Antriebs selbst auf die Phasendifferenz vernachlässigbar ist. Dies ist in verschiedener Hinsicht problematisch.

Die Stromeinprägung in den eine Spule aufweisenden elektromagnetischen Antrieb führt zwangsläufig zu hohen und verrauschten Spannungen an der Antriebsspule, da die Sprünge im Reglerausgangssignal - und seien diese auch nur durch die Quantisierungsstufen eines Digital/Analog-Wandlers bedingt - als Sprünge im Strom durch den elektromagnetischen Antrieb auftreten und dort durch die Antriebsspule "differenziert" werden (u=L*di/dt); das gilt insbesondere für Stelleinrichtungen mit einer hohen Slew Rate, also mit hoher Anstiegsgeschwindigkeit des Stromes. Dies ist problematisch hinsichtlich der elektromagnetischen Verträglichkeit und führt auch zu einer Verringerung des Signal-Rausch-Abstandes und damit zu einer Vergrößerung der Messunsicherheit bei der Messung verschiedener Prozessgrößen - Massedurchfluss im Falle eines Coriolis-Massedurchflussmessgeräts - und bei der Bestimmung verschiedener Parameter des Resonanzmesssystems - im Falle eines Coriolis-Massedurchflussmessgeräts beispielsweise die Steifigkeit des Messrohrs. Aufgrund dieser Gegebenheiten ist auch eine schnelle Messung des Antriebsstroms nicht möglich, da der relativ kleine Antriebsstrom sehr verrauscht ist, was eine lange Mittelungszeit erforderlich macht, bis ein hinreichend glattes Signal erhalten wird.

Aufgabe der vorliegenden Erfindung ist es, ein Verfahren zum Betreiben eines Resonanzmesssystems zur Verfügung zu stellen, das ein schnelles und zuverlässiges Anfahren, Halten und Nachführen einer Resonanzstelle als Arbeitspunkt des Resonanzmesssystems ermöglicht.

Das erfindungsgemäße Verfahren zum Betreiben eines Resonanzmesssystems, bei dem die zuvor hergeleitete und aufgezeigte Aufgabe gelöst ist, ist gegeben durch Merkmale des Kennzeichnungsteils von Patentanspruch 1.

Hier ist zunächst vorgesehen, dass in einem Regelkreis die Regler-Schwingungsaufnehmer-Phasendifferenz Δϕ(y, u₁) zwischen dem Ausgangssignal y des Schwingungsaufnehmers und dem Reglerausgangssignal u₁ erfasst wird, aus einer vorgegebenen Phasendifferenz Δϕ_{S1}, und der Regler-Schwingungsaufnehmer-Phasendifferenz Δϕ(y, u₁) eine Regelabweichung e berechnet wird und die Regelabweichung e dem Regler als Eingangssignal zur Verfügung gestellt wird. Durch die Wahl einer geeigneten vorgegebenen Phasendifferenz Δϕ_{S1}, wird eine Korrektur einer sonst unberücksichtigten Phasenverschiebung zwischen dem Eingangssignal und dem Ausgangssignal des Schwingelements vorgenommen.

Das erfindungsgemäße Verfahren verzichtet zunächst ganz bewusst auf die problematische Erfassung einer Zustandsgröße des elektromagnetischen Antriebs - wie den Spulenstrom -, sondern arbeitet anstelle dessen mit dem wohlbekannten Reglerausgangssignal, das deshalb bekannt ist, weil es durch den Regler erzeugt wird, der üblicherweise in einem Mikroprozessor oder Mikrocontroller durch einen digitalen Regelalgorythmus und einen nachfolgenden Signalgenerator implementiert ist und daher dem Verwender zugänglich ist.

Das erfindungsgemäße Verfahren ist schnell, da Messzeiten mit vergleichsweise großen Zeitkonstanten im Bereich der Tiefpassfilterung und Glättung vermieden werden können, dafür wird in Kauf genommen, dass das Regelergebnis möglicherweise nicht so genau an den Resonanzpunkt heranreicht, wie wenn direkt mit dem Resonanzpunkt in Verbindung stehende Größen des Resonanzmesssystems messtechnisch erfasst worden wären. Die mögliche Ungenauigkeit rührt insbesondere daher, dass das Übertragungsverhalten und damit auch die Phasenbeeinflussung der Übertragungsglieder zwischen dem Regler und dem elektromagnetischen Antrieb unberücksichtigt bleiben.

Um eine gezielte Korrektur vornehmen zu können und um insbesondere eine vorgegebene Phasenverschiebung zwischen dem Eingangssignal und dem Ausgangssignal des Schwingelements möglichst schnell realisieren zu können, werden bei einer bevorzugten Weiterentwicklung des Verfahrens die Phasenverschiebungen aller Elemente des Regelkreises außer der des Schwingelements frequenzabhängig erfasst und in der das Verfahren instrumentell realisierenden Recheneinheit (z. B. DSP) abgelegt (Frequenzgang). Hieraus werden dann vorzugsweise zunächst statische Korrekturen abgeleitet, die unterschiedlich technisch realisiert werden können. Zum einen beispielsweise durch Ergänzung zusätzlicher Übertragungsglieder im Regelkreis, die eine entsprechende Phasenkorrektur vornehmen, oder durch Vorgabe entsprechender Sollwerte für die Phasenverschiebung zwischen dem Ausgangssignal u₁ des Reglers und dem Ausgangssignal y des Schwingungsaufnehmers.

Die vorgegebene Phasendifferenz Δϕ_{S1}, wird gemäß dem Übertragungsverhalten des Resonanzmesssystems und dem Verhältnis von Reglerausgangssignal u₁ und dem Ausgangssignal y des Schwingungsaufnehmers gewählt. Bei dem eingangs beschriebenen Coriolis-Massedurchflussmessgerät als Resonanzmesssystem, das mit einer spannungsgesteuerten Stromquelle als elektrische Stelleinrichtung arbeitet, würde die vorgegebene Phasendifferenz Δϕ_{S1}, in erster Näherung auf Null gesetzt werden, so dass die erfasste Regler-Schwingungsaufnehmer-Phasendifferenz praktisch direkt als Regelabweichung in den Regler zurückgeführt werden könnte.

Wäre darüber hinaus bekannt, dass die elektrische Stelleinrichtung im Arbeitspunkt eine gewisse mittlere Phasenverschiebung bewirkt, könnte in einer ersten Verbesserung des erfindungsgemäßen Verfahrens die vorgegebene Phasendifferenz Δϕ_{S1}, genau auf diesen Wert gesetzt werden, um eine entsprechende Kompensierung der Phasenverschiebung zu bewirken. Es hat sich herausgestellt, dass das erfindungsgemäße Verfahren auf Grundlage der Regler-Schwingungsaufnehmer-Phasendifferenz zu guten Regelergebnissen in den bzw. nahe an den Resonanzarbeitspunkt führt mit Abweichungen, die energetisch durchaus tolerabel sind.

Im Normalfall wird die vorgegebene Phasendifferenz Δϕ_{S1}, so gewählt werden, dass das Schwingelement zur Schwingung in wenigstens einer Eigenform in Resonanz oder nahe dem Resonanzpunkt angeregt wird. Zum Zwecke der Diagnose kann es aber durchaus auch gewünscht sein, die Phasendifferenz Δϕ_{S1} gänzlich anders zu wählen, beispielsweise zum Zwecke der selektiven Parameteridentifikation, hier z. B. auf einen Wert von +/- 45°.

Bei dem erfindungsgemäßen Verfahren ist vorgesehen, dass eine zusätzliche Regler-Antrieb-Phasendifferenz Δϕ(i_{S}, u₁) gebildet wird, nämlich die Phasendifferenz zwischen einer Zustandsgröße i_{S} des elektromagnetischen Antriebs und dem Reglerausgangssignal, wobei in einer Variante diese Regler-Antriebs-Phasendifferenz dann als vorgegebene Phasendifferenz Δϕ_{S1}, verwendet wird. Durch diese zusätzliche Maßnahme ist es möglich, eine Information über die Phasenverschiebung derjenigen Übertragungselemente zu erhalten, die zwischen dem Regler und dem elektromagnetischen Antrieb liegen, wobei diese Elemente, vorliegend die elektrische Stelleinrichtung, zur Implementierung des zuvor beschriebenen schnellen aber bewusst etwas unpräzise gehaltenen Regelkreises mit Absicht außer Acht gelassen worden sind.

In einer anderen Variante des zuvor beschriebenen Verfahrens ist vorgesehen, dass ebenfalls wieder eine Regler-Antrieb-Phasendifferenz Δϕ(i_{S}, u₁) zwischen einer Zustandsgröße i_{S} des elektromagnetischen Antriebs und dem Reglerausgangssignal ermittelt wird, wobei die vorgegebene Phasendifferenz Δϕ_{S1}, diesmal berechnet wird aus der Regler-Antrieb-Phasendifferenz Δϕ(i_{S}, u₁) und einer weiteren vorgegebenen Phasendifferenz Δϕ_{S2}. Durch diese Maßnahme ist es möglich, dem Phasenregelkreis wiederum von außen eine von dem "normalen" Arbeitspunkt abweichende Phasenlage vorzugeben, beispielsweise zu Diagnosezwecken.

Bei den Verfahrensvarianten, bei denen die Regler-Antrieb-Phasendifferenz ermittelt wird, hat es sich als vorteilhaft erwiesen, wenn die Regler-Antrieb-Phasendifferenz mit einem Tiefpass gefiltert und damit geglättet wird, wobei insbesondere im Fall eines Coriolis-Massedurchflussmessgeräts als Resonanzmesssystem für den Tiefpass Zeitkonstanten im Sekundenbereich gewählt werden können. Erfahrungsgemäß ändert sich die Regler-Antrieb-Phasendifferenz in diesem Anwendungsbeispiel nicht so schnell als dass wesentlich kürzere Zeitkonstanten erforderlich wären.

Das erfindungsgemäße Verfahren hat überraschenderweise weitere Vorteile. Die Regelung des Resonanzmesssystems auf die Regler-Schwingungsaufnehmer-Phasendifferenz, insbesondere mit einer zusätzlichen Korrektur durch die Ermittlung der Regler-Antrieb-Phasendifferenz, funktioniert so gut, dass eine Auslegung des Regelkreises, insbesondere eine Auslegung der elektrischen Stelleinrichtung auf eine hohe Bandbreite nicht mehr erforderlich ist, so dass die elektrische Stelleinrichtung nicht mehr mit schnellen und vergleichsweise teuren Bauelementen realisiert werden muss, da die erfindungsgemäße Regelung ausreichend schnell gewährleistet, dass die Phasenverschiebung im Frequenzarbeitsbereich unter einem vorbestimmten Wert bleibt. Bei den aus dem Stand der Technik bekannten Verfahren ist die Regelgüte erheblich abhängig von der durch die elektrische Stelleinrichtung bedingte Phasenverschiebung, wobei hier zu berücksichtigen ist, dass bei höheren Phasenverschiebungen insbesondere direkt rückgekoppelte Resonanzmesssysteme zur Schwingung neigen. Diese müssen im Stand der Technik deshalb so ausgelegt werden, dass die durch die elektrische Stelleinrichtung - beispielsweise eine spannungsgesteuerte Stromquelle - bedingte Phasenverschiebung im Arbeitsfrequenzbereich beispielsweise unter 5° bleibt, was zum Einsatz von teureren Referenzbauelementen und analogen Korrekturschaltungen führt. Dieses Erfordernis ist durch das erfindungsgemäße Verfahren mit einem schnellen Regelkreis auf Grundlage der Regler-Schwingungsaufnehmer-Phasendifferenz und einer langsameren Berechnung eines Korrekturwertes auf Grundlage der Regler-Antrieb-Phasendifferenz nicht mehr gegeben.

Die zuvor hergeleitete Aufgabe ist ferner bei dem eingangs dargestellten Resonanzmesssystem dadurch gelöst, dass dort ein Regelkreis so eingerichtet ist, dass das zuvor erläuterte Verfahren zum Betrieb eines Resonanzmesssystems von dem Resonanzmesssystem konkret ausführbar ist und im Regelbetrieb - Einregeln, Halten und Nachführen eines Resonanzbetriebpunktes - ausgeführt wird. "Ausführbar" bedeutet demnach, dass das Verfahren auf dem Resonanzmesssystem zur Ausführung implementiert ist und nicht grundsätzlich einfach nur auf dem Resonanzmesssystem implementiert werden könnte.

Im Einzelnen gibt es nun verschiedene Möglichkeiten, das erfindungsgemäße Verfahren und das erfindungsgemäße Resonanzmesssystem auszugestalten und weiterzubilden. Dazu wird verwiesen auf die den Patentansprüchen 1 und 9 nachgeordneten Patentansprüche und auf die Beschreibung bevorzugter Ausführungsbeispiele in Verbindung mit der Zeichnung. In der Zeichnung zeigen
- Fig. 1: schematisch die Struktur eines Resonanzmesssystems in Form eines Coriolis-Massedurchflussmessgeräts, wie es aus dem Stand der Technik bekannt ist, wie es aber auch für das erfindungsgemäße Verfahren Verwendung finden könnte,
- Fig. 2: das Ersatzschaltbild einer in einem elektromagnetischen Antrieb enthaltenen Spule mit elektrischer Stelleinrichtung,
- Fig. 3: das erfindungsgemäße Verfahren zum Betrieb eines Resonanzmesssystems in Blockschaltbilddarstellung,
- Fig. 4: ein erweitertes Ausführungsbeispiel des erfindungsgemäßen Verfahrens zum Betrieb eines Resonanzmesssystems in Blockschaltbilddarstellung,
- Fig. 5: ein weiteres erweitertes Ausführungsbeispiel des erfindungsgemäßen Verfahrens zum Betrieb eines Resonanzmesssystems in Blockschaltbilddarstellung und
- Fig. 6: ein letztes erweitertes Ausführungsbeispiel des erfindungsgemäßen Verfahrens zum Betrieb eines Resonanzmesssystems in Blockschaltbilddarstellung mit Komponentensicht.

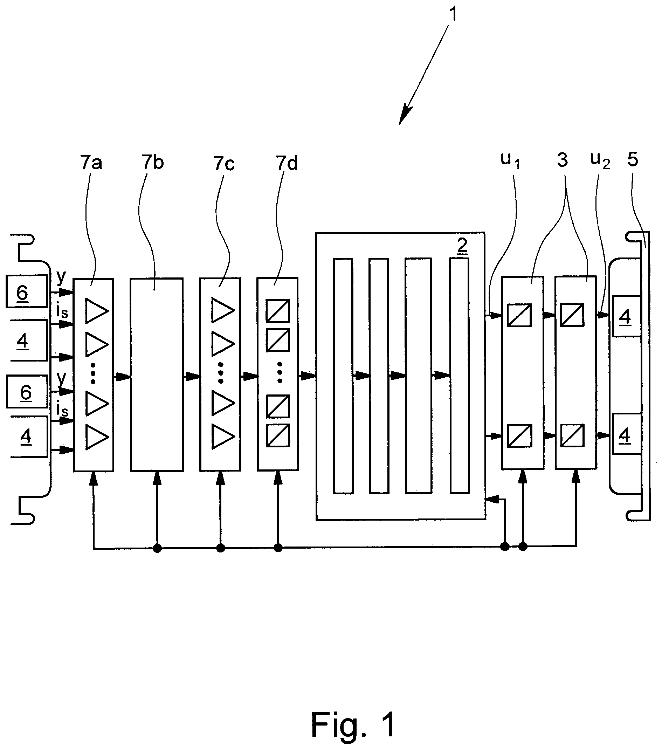

Fig. 1 zeigt ein Resonanzmesssystem 1 in Form eines Coriolis-Massedurchflussmessgeräts, wobei das Resonanzmesssystem 1 einen in einem digitalen Signalprozessor implementierten Regler 2, eine elektrische Stelleinrichtung 3 und einen elektromagnetischen Antrieb 4 als Schwingungserzeuger aufweist.

Der elektromagnetische Antrieb 4 hat die Aufgabe, ein Schwingelement 5, vorliegend ein mit einem Medium durchströmbares Messrohr, zu einer Schwingung in einer Eigenform anzuregen. Ja nach Art der Eigenform ist dazu lediglich ein einziger elektromagnetischer Antrieb 4 erforderlich, sollen auch höhere Moden angeregt werden, können auch zwei oder mehr elektromagnetische Antriebe 4 erforderlich sein.

In Fig. 1 ist das Resonanzmesssystems 1 in Form des Coriolis-Massedurchflussmessgeräts zweigeteilt dargestellt. Das eine Einheit bildende Coriolis-Massedurchflussmessgerät endet zu einer Hälfte am rechten Bildrand der Figur und beginnt aus Gründen der übersichtlichen Darstellung mit der anderen Hälfte wieder am linken Bildrand der Figur. Dort ist zu erkennen, dass das Resonanzmesssystem 1 ferner auch Schwingungsaufnehmer 6 aufweist, die ein Ausgangssignal y ausgeben, vorliegend in Form eines Geschwindigkeitssignals, das Auskunft über die Geschwindigkeit der Messrohrbewegung, also des Schwingelements 5, gibt. Der Regler 2 erzeugt ein Reglerausgangssignal u₁ zur Ansteuerung der elektrischen Stelleinrichtung 3, und die elektrische Stelleinrichtung 3 erzeugt nachfolgend ein elektrisches Anregungssignal u₂ zur Anregung des elektromagnetischen Antriebs 4. An die Schwingungsaufnehmer 6 schließt sich eine Mehrzahl von Übertragungselementen an, die im wesentlichen der Signalaufbereitung dienen, wie beispielsweise eine aus Verstärkern bestehende Anpassungselektronik 7a, ein Hardwaremultiplexer 7b zur Realisierung verschiedener umschaltbarer Messkanäle, eine weitere Anpassungselektronik 7c und ein Analog/Digital-Wandler 7d, der die analogen gemessenen Signale dem Regler 2 in Form digitaler Signale wieder zuführt.

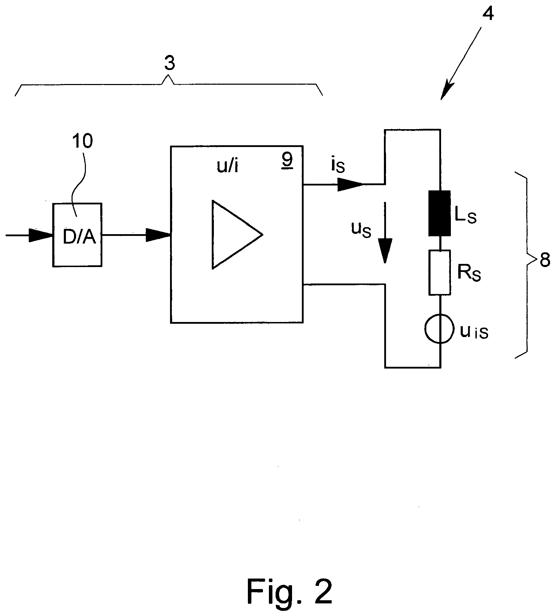

Im Stand der Technik bildet der so implementierte Regelkreis einen PhasenRegelkreis und beruht auf der Einprägung eines Stromes i_{S} in eine Spule 8 des elektromagnetischen Antriebs 4. Dieses Konzept ist zur Verdeutlichung in Fig. 2 nochmals dargestellt; der elektromagnetische Antrieb 4 weist hier eine Antriebsspule 8 auf, die im Ersatzschaltbild gemäß Fig. 2 eine Spulen-Induktivität L_{S}, einen ohmschen Spulenwiderstand R_{S} und eine geschwindigkeitsproportionale induzierte Spannungsquelle u_{iS} aufweist (u_{S} = i_{S}R_{S} + L*di_{S}/dt + k*dv/dt). Die elektrische Stelleinrichtung 3 arbeitet mit einer spannungsgesteuerten Stromquelle 9, die von einem Digital/Analog-Wandler 10 quantisierte Spannungssignale erhält, die am Ausgang der spannungsgesteuerten Stromquelle 9 zu sprunghaften Änderungen des Spulenstromes i_{S} führen. Diese Stromeinprägung führt zwangsläufig zu einer noch unruhigeren Änderung der Klemmenspannung u_{S} an der Spule 8, insgesamt ergibt sich also eine sehr verrauschte Klemmenspannung u_{S} an der Spule 8, was auch zu einem aufgrund verschiedener Einflüsse verrauschten Stromsignal i_{S} führt.

Bei dem elektromagnetischen Antrieb 4, der, wie in Fig. 2 dargestellt, eine Spule 8 aufweist, ist der Spulenstrom i_{S} von besonderer Bedeutung, weil der Spulenstrom i_{S} jene Zustandsgröße des elektromagnetischen Antriebs 4 ist, die proportional der Kraftwirkung des elektromagnetischen Antriebs 4 auf das Schwingelement 5 ist. Im Falle des als Coriolis-Massedurchflussmessgerät ausgestalteten Resonanzmesssystems 1 ist im Resonanzfall die Phasendifferenz zwischen der auf das Schwingelement 5 wirkenden Kraft und damit auch zwischen dem Spulenstrom i_{S} und der erfassten Geschwindigkeit y der Messrohrbewegung gleich Null. Die zur Realisierung einer Phasenregelung auf den Resonanzarbeitspunkt unter Verwendung des Spulenstroms i_{S} als Eingangsgröße und Zustandsgröße des elektromagnetischen Antriebs und unter Verwendung des Geschwindigkeitssignals als Ausgangssignal y des Schwingungsaufnehmers 6 ist problematisch: die Anforderungen an die verwendeten elektrischen Bauelemente sind dann sehr hoch, da breitbandig arbeitende Bauelemente mit niedriger Phasenabweichung im Arbeitspunkt verwendet werden müssen, was die Lösung insgesamt kostspielig macht.

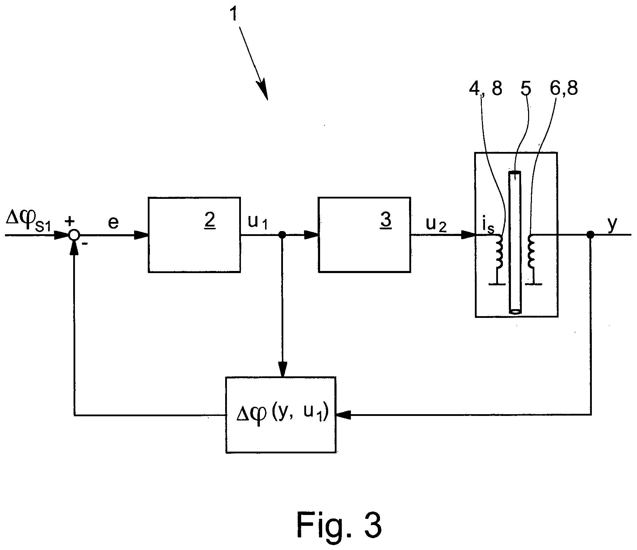

In Fig. 3 ist das erfindungsgemäße Verfahren zum Betreiben eines Resonanzmesssystems 1 dargestellt, nämlich dargestellt in Form eines Blockschaltbildes. Der Regler 2 steuert über das Reglerausgangssignal u₁ die elektrische Stelleinrichtung 3 an, wobei die elektrische Stelleinrichtung 3 durch Ausgabe des elektrischen Anregungssignals u₂ den elektromagnetischen Antrieb 4 ansteuert, der seinerseits als Schwingungserzeuger das Schwingelement 5 auslenkt, das hier als Messrohr eines Coriolis-Massedurchflussmessgeräts vorliegt. Der elektromagnetische Antrieb 4 besteht aus einer schematisch dargestellten Spule 8 mit einem Dauermagneten als Kern, wobei der nicht dargestellte Dauermagnet bei Bestromung der Spule 8 eine Hubbewegung ausführt und so das Schwingelement 5 zu einer Schwingung anregen kann. Die Schwingung des Schwingelements 5 wird von dem Schwingungsaufnehmer 6 erfasst, der im vorliegenden Fall ebenfalls einen Permanentmagneten und eine Spule aufweist, wobei zur Auswertung der Lageänderung des Schwingelements 5 die in der Spule 8 induzierte Spannung herangezogen wird. Das Geschwindigkeitssignal liegt als Ausgangssignal y des Schwingungsaufnehmers 6 vor.

Das erfindungsgemäße Verfahren sieht vor, dass zunächst die Regler-Schwingungsaufnehmer-Phasendifferenz Δϕ(y, u₁) zwischen dem Ausgangssignal y des Schwingungsaufnehmers 6 und dem Reglerausgangssignal u₁ erfasst wird, und aus einer vorgegebenen Phasendifferenz Δϕ_{S1}, und dieser Regler-Schwingungsaufnehmer-Phasendifferenz Δϕ(y, u₁) eine Regelabweichung e berechnet wird, wobei diese Regelabweichung e dem Regler 2 als Eingangssignal zur Verfügung gestellt wird. Dadurch wird ein Regelkreis implementiert, der auf die Regler-Schwingungsaufnehmer-Phasendifferenz Δϕ(y, u₁) regelt und nicht auf die Phasendifferenz, die für eine Regelung auf den Resonanzpunkt des Resonanzmesssystem eigentlich entscheidend ist, vorliegend nämlich die Phasendifferenz zwischen dem Spulenstrom i_{S} und dem Geschwindigkeitssignal y am Ausgang des Schwingungsaufnehmers 6. Dadurch wird ein Fehler in Kauf genommen, nämlich die unberücksichtigte Phasenverschiebung, die durch die elektrische Stelleinrichtung 3 bewirkt wird. Diese Phasenverschiebung wird fälschlicherweise - aber wissentlich - dem Kern des Resonanzmesssystems 1 zugeschlagen, nämlich dem elektromagnetischen Antrieb 4, dem Schwingelement 5 und dem Schwingungsaufnehmer 6. Der Vorteil des erfindungsgemäßen Verfahrens liegt darin, dass mit der Regelung auf die Regler-Schwingungsaufnehmer-Phasendifferenz Δϕ(y, u₁) mit vergleichsweise unverrauschten Signalen eine sehr schnelle Regelung auf einen solchen Arbeitspunkt implementiert werden kann, der recht nahe am Resonanzpunkt des Resonanzmesssystems 1 ist, so dass mit einer kleinen Einschränkung in der Resonanz-Phasenlage eine ausgesprochen schnelle Regelung realisiert werden kann, eine Regelung, die zudem nicht mehr den Einsatz von Bauelementen mit hoher Bandbreite und einer nur ganz geringen Phasenverschiebung der elektrischen Stelleinrichtung im Arbeitsfrequenzbereich erfordert.

Die vorgegebene Phasendifferenz Δϕ_{S1}, wird im einfachsten Fall auf den Wert gesetzt werden, der sich idealerweise als Phasenlage bzw. als Phasendifferenz zwischen dem Reglerausgangssignal u₁ und dem Ausgangssignal y des Schwingungsaufnehmers 6 ergeben würde, wenn die elektrische Stelleinrichtung 3 praktisch keine Phasenverschiebung bewirkte und sich der Resonanzfall einstellen würde. Im dargestellten Fall des Coriolis-Massedurchflussmessgeräts entspricht dies der Nullsetzung der vorgegebene Phasendifferenz Δϕ_{S1}; bei dieser Auslegung wird das Schwingelement 5 zur Schwingung in einer Eigenform in Resonanz oder in Nähe des Resonanzpunktes angeregt.

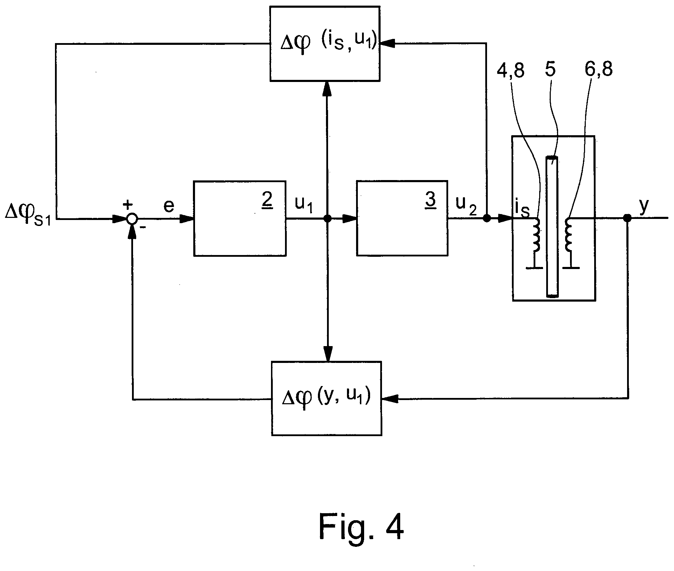

In Fig. 4 ist eine erweiterte Ausführung des zuvor erläuterten Verfahrens dargestellt, bei der eine Regler-Antrieb-Phasendifferenz Δϕ(i_{S}, u₁) zwischen der Zustandsgröße i_{S} des elektromagnetischen Antriebs 4 und dem Reglerausgangssignal u₁ ermittelt wird, wobei die Regler-Antrieb-Phasendifferenz Δϕ(i_{S}, u₁) dann als vorgegebene Phasendifferenz Δϕ_{S1}, verwendet wird. Durch diese Maßnahme wird der zuvor zugelassene Fehler in der Phasenregelung wieder kompensiert

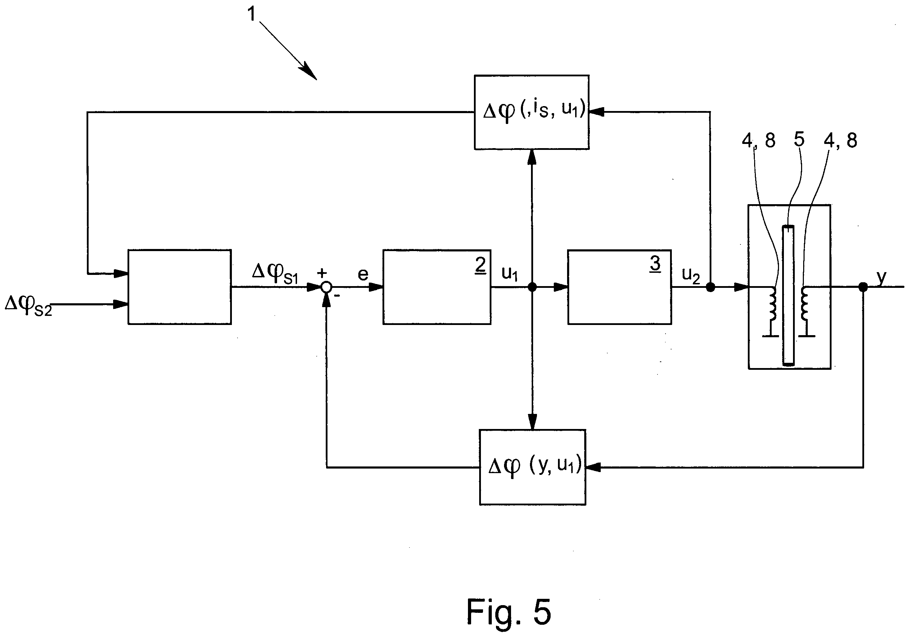

Bei der in Fig. 5 dargestellten Erweiterung des Verfahrens wird auch zunächst zusätzlich die Regler-Antrieb-Phasendifferenz Δϕ(i_{S}, u₁) zwischen der Zustandsgröße i_{S} des elektromagnetischen Antriebs 4 und dem Reglerausgangssignal u₁ ermittelt, wobei dann aus der Regler-Antrieb-Phasendifferenz Δϕ(i_{S}, u₁) und aus einer weiteren vorgegebenen Phasendifferenz Δϕ_{S2} die vorgegebene Phasendifferenz Δϕ_{S1}, berechnet wird, was auch andere Phasenvorgaben und damit auch andere Betriebsmodi ermöglicht, beispielsweise eine phasenselektive Anregung des Coriolis-Massedurchflussmessgerät bei Phasenvorgaben von Δϕ_{S2} = +/- 45°.

Bei beiden in den Fig. 4 und 5 dargestellten Varianten des Verfahrens wird als Zustandsgröße i_{S} des elektromagnetischen Antriebs 4 der Strom in der dort verwendeten Antriebsspule 8 erfasst.

Die bislang beschriebenen Verfahren gestatten die Verwendung einer spannungsgesteuerten Stromquelle als elektrische Stelleinrichtung 3, auch einer solchen spannungsgesteuerten Stromquelle, die nur weniger hohen Anforderungen genügt, als denjenigen aus dem Stand der Technik bekannten Anforderungen bei Phasenregelungen, die auf die unmittelbaren Ein- und Ausgangsgrößen der Resonanzstrecke gerichtet sind. Dies ermöglicht den Einsatz von preiswerten Standardbauelementen.

Besonders vorteilhaft lässt sich das Verfahren allerdings dann anwenden, wenn die elektrische Stelleinrichtung 3 als elektrisches Anregungssignal u₂ zur Anregung des elektromagnetischen Antriebs 4 eine Spannung u_{S} bereitstellt, was in den Ausführungsbeispielen gemäß den Fig. 3 bis 6 der Fall ist, hier wird die Spannung u_{S} als Anschlussspannung der Antriebsspule 8 des elektromagnetischen Antriebs 4 appliziert. Dies ist sowohl sinnvoll bei der alleinigen - schnellen - Phasenregelung auf die Regler-Schwingungsaufnehmer-Phasendifferenz Δϕ(y, u₁) zwischen dem Ausgangssignal y des Schwingungsaufnehmers 6 und dem Reglerausgangssignal u₁, genauso wie es auch sinnvoll ist bei einer zusätzlichen Korrektur der vorgegebenen Phasendifferenz Δϕ_{S1}, durch die Ermittlung der Regler-Antrieb-Phasendifferenz Δϕ(i_{S}, u₁) zwischen der Zustandsgröße i_{S} des elektromagnetischen Antriebs 4 und dem Reglerausgangssignal u₁. In jedem Fall werden dadurch die Stromeinprägung und die damit einhergehenden und zuvor beschriebenen Störungen vermieden.

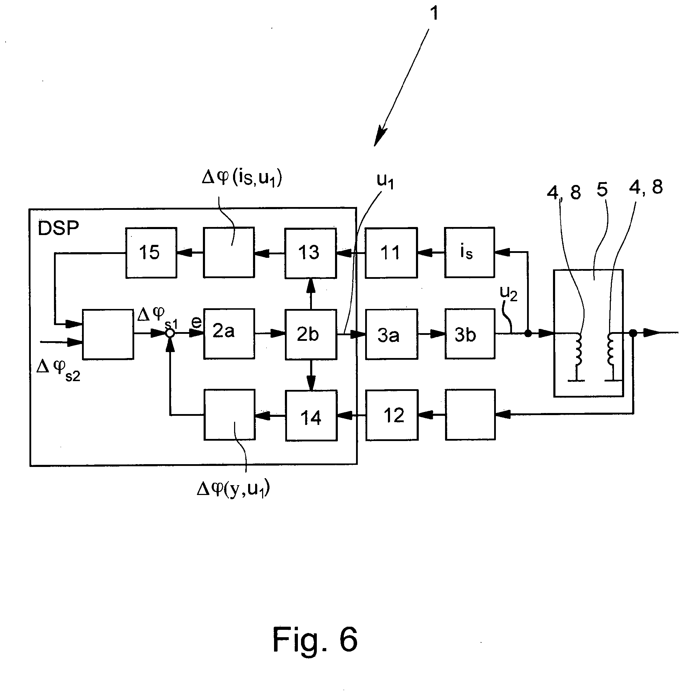

Fig. 6 zeigt nochmals in einer größeren Detaillierung ein Resonanzmesssystem 1 in Form eines Coriolis-Massedurchflussmessgeräts, wobei das Resonanzmesssystem 1 einen in einem digitalen Signalprozessor (DSP) implementierten Regler 2 aufweist, eine elektrische Stelleinrichtung 3 mit einem Digital/Analog-Wandler 3a und einer spannungsgesteuerten Spannungsquelle 3b als Leistungsteil. Wie bei den vorangehenden Beispielen weist der elektromagnetischen Antrieb 4 eine Spule 8 auf als Schwingungserzeuger.

In dem unteren Signalzweig ist der schnelle Regelkreis implementiert, der auf die Regler-Schwingungsaufnehmer-Phasendifferenz Δϕ(y, u₁) zwischen dem Ausgangssignal y des Schwingungsaufnehmers 6 und dem Reglerausgangssignal u₁ beruht. In dem oberen Signalzweig ist die - langsamere - Berechnung des Korrekturwertes für die Phasendifferenz implementiert, die auf der Regler-Antrieb-Phasendifferenz Δϕ(i_{S}, u₁) zwischen der Zustandsgröße i_{S} des elektromagnetischen Antriebs 4 und dem Reglerausgangssignal u₁ beruht. Das erfasste Stromsignal wie auch das erfasste Geschwindigkeitssignal y werden durch Analog/Digital-Wandler 11, 12 digitalisiert und dem DSP zugeleitet. Demodulatoren 13, 14 zerlegen die Messgrößen i_{S} und y mit Hilfe von orthogonalen Basissignalen in Signalkomponenten, die die Bestimmung der Phasenlage der Signale in Bezug auf das Basissignal u₁ gestatten, wobei die Regler-Antrieb-Phasendifferenz Δϕ(i_{S}, u₁) noch über einen Tiefpass 15 gefiltert wird und wobei dieser Tiefpass eine Zeitkonstante von etwa zwei Sekunden hat.

Die Realisierung der elektrischen Stelleinrichtung 3 als spannungsgesteuerter Spannungswandler hat ferner den unerwarteten Vorteil, dass der geringe Ausgangswiderstand des spannungsgesteuerten Spannungswandlers als "Kurzschluss" hinsichtlich der Antriebsspule 8 wirkt und so eine von der Geschwindigkeit des Messrohrs abhängige Dämpfung der Schwingung des Messrohres erzielt wird. Deshalb kann der Einbau von Kurzschlussringen im elektromagnetischen Antrieb 4 zum Zwecke der Dämpfung des an sich nur schwach gedämpften Systems entfallen.

## Patentansprüche

1. Verfahren zum Betreiben eines Resonanzmesssystems (1) in Form eines Coriolis-Massedurchflussmessgeräts, wobei das Resonanzmesssystem (1) wenigstens einen Regler (2), wenigstens eine elektrische Stelleinrichtung (3), wenigstens einen elektromagnetischen Antrieb (4) als Schwingungserzeuger, wenigstens ein Schwingelement (5), und wenigstens einen Schwingungsaufnehmer (6) umfasst, wobei der Regler (2) ein Reglerausgangssignal (u₁) zur Ansteuerung der elektrischen Stelleinrichtung (3) erzeugt, die elektrische Stelleinrichtung (3) ein elektrisches Anregungssignal (u₂) zur Anregung des elektromagnetischen Antriebs (4) bereitstellt, der elektromagnetische Antrieb (4) das Schwingelement (5) zur Schwingung in wenigstens einer Eigenform anregt und wobei die angeregte Schwingung des Schwingelements (5) von dem Schwingungsaufnehmer (6) erfasst und als wenigstens ein Ausgangssignal (y) ausgegeben wird,
**dadurch gekennzeichnet,**
**dass** in einem Regelkreis die Regler-Schwingungsaufnehmer-Phasendifferenz (Δϕ(y, u₁)) zwischen dem Ausgangssignal (y) des Schwingungsaufnehmers (6) und dem Reglerausgangssignal (u₁) erfasst wird, aus einer vorgegebenen Phasendifferenz (Δϕ_{S1}) und der Regler-Schwingungsaufnehmer-Phasendifferenz (Δϕ(y, u₁)) eine Regelabweichung (e) berechnet wird und die Regelabweichung (e) dem Regler (2) als Eingangssignal zur Verfügung gestellt wird, wobei eine Regler-Antrieb-Phasendifferenz (Δϕ(i_{S}, u₁)) zwischen einer Zustandsgröße (i_{S}) des elektromagnetischen Antriebs (4) und dem Reglerausgangssignal (u₁) ermittelt wird und entweder die Regler-Antrieb-Phasendifferenz (Δϕ(i_{S}, u₁)) als vorgegebene Phasendifferenz (Δϕ_{S1}) verwendet wird oder aus der Regler-Antrieb-Phasendifferenz (Δϕ(i_{S}, u₁)) und aus einer weiteren vorgegebenen Phasendifferenz (Δϕ_{S2}) die vorgegebene Phasendifferenz (Δϕ_{S1}) berechnet wird, wobei als Zustandsgröße (i_{S}) des elektromagnetischen Antriebs der Strom einer Antriebsspule (8) erfasst wird.

2. Verfahren nach Anspruch 1, **dadurch gekennzeichnet, dass** die vorgegebene Phasendifferenz (Δϕ_{S1}) so gewählt wird, dass das Schwingelement (5) zur Schwingung in wenigstens einer Eigenform in Resonanz oder nahe dem Resonanzpunkt angeregt wird.

3. Verfahren nach einem der Ansprüche 1 oder 2, **dadurch gekennzeichnet, dass** die elektrische Stelleinrichtung (3) als elektrisches Anregungssignal (u₂) zur Anregung des elektromagnetischen Antriebs (4) eine Spannung (u_{S}) bereitstellt, wobei die Spannung (u_{S}) insbesondere als Klemmenspannung einer Antriebsspule (8) des elektromagnetischen Antriebs (4) appliziert wird.

4. Verfahren nach einem der Ansprüche 1 bis 3, **dadurch gekennzeichnet, dass** die ermittelte Regler-Antrieb-Phasendifferenz (Δϕ(i_{S}, u₁)) mit einem Tiefpass (11) gefiltert wird, insbesondere mit einem Tiefpass (11) mit einer Zeitkonstante im Sekundenbereich.

5. Verfahren nach einem der Ansprüche 1 bis 4, **dadurch gekennzeichnet, dass** zur Ermittlung der Regler-Schwingungsaufnehmer-Phasendifferenz (Δϕ(y, u₁)) und/oder der Regler-Antrieb-Phasendifferenz (Δϕ(i_{S}, u₁)) von dem Regler (2) als Reglerausgangssignal (u₁) ein harmonisches Basissignal erzeugt wird, wobei die jeweilige Phasendifferenz (Δϕ(y, u₁), Δϕ(i_{S}, u₁)) durch Demodulation des jeweils interessierenden Signals (y, i_{S}) mit dem harmonischen Basissignal und einem von dem Regler (2) bereitgestellten dazu orthogonalen weiteren harmonischen Basissignal ermittelt wird.

6. Resonanzmesssystem (1) in Form eines Coriolis-Massedurchflussmessgeräts, wobei das Resonanzmesssystem (1) wenigstens einen Regler (2), wenigstens eine elektrische Stelleinrichtung (3), wenigstens einen elektromagnetischen Antrieb (4) als Schwingungserzeuger, wenigstens ein Schwingelement (5), und wenigstens einen Schwingungsaufnehmer (6) umfasst, wobei im Betrieb des Resonanzmesssystems (1) der Regler (2) ein Reglerausgangssignal (u₁) zur Ansteuerung der elektrischen Stelleinrichtung (3) erzeugt, die elektrische Stelleinrichtung (3) ein elektrisches Anregungssignal (u₂) zur Anregung des elektromagnetischen Antriebs (4) bereitstellt, der elektromagnetische Antrieb (4) das Schwingelement (5) zur Schwingung in wenigstens einer Eigenform anregt und wobei die angeregte Schwingung des Schwingelements (5) von dem Schwingungsaufnehmer (6) erfasst und als wenigstens ein Ausgangssignal (y) ausgegeben wird,
**dadurch gekennzeichnet,**
**dass** ein Regelkreis so implementiert ist, dass das Verfahren gemäß einem der Ansprüche 1 bis 5 von dem Resonanzmesssystem konkret ausführbar ist.

7. Resonanzmesssystem (1) nach Anspruch 6, **dadurch gekennzeichnet, dass** die elektrische Stelleinrichtung (3) ein spannungsgesteuerter Spannungswandler ist.

## Claims

1. Method for operating a resonance measuring system (1) in the form of a Coriolis mass flowmeter, wherein the resonance measuring system (1) comprises at least one controller (2), at least one electric setting device (3), at least one electromagnetic drive (4) as oscillation generator, at least one oscillation element (5), and at least one oscillation sensor (6), wherein the controller (2) generates a controller output signal (u₁) for driving the electric setting device (3), the electric setting device (3) provides an electric excitation signal (u₂) for exciting the electromagnetic drive (4), the electromagnetic drive (4) excites the oscillation element (5) to oscillation in at least one eigenform, and wherein the excited oscillation of the oscillation element (5) is detected by the oscillation sensor (6) and output as at least one output signal (y),
**characterized in**
**that** in a control loop, the controller-oscillation sensor phase difference (Δϕ(y, u₁)) between the output signal (y) of the oscillation sensor (6) and the controller output signal (u₁) is detected, a control deviation (e) is calculated from a predetermined phase difference (Δϕ_{S1}) and the controller-oscillation sensor phase difference (Δϕ(y, u₁)) and the control deviation (e) is provided as an input signal to the controller (2), wherein a controller-drive phase difference (Δϕ(i_{S}, u₁)) between a state variable (is) of the electromagnetic drive (4) and the controller output signal (u₁) is determined and either the controller-drive phase difference (Δϕ(i_{S}, u₁)) is used as a predetermined phase difference (Δϕ_{S1}) or the predetermined phase difference (Δϕ_{S1}) is calculated from the controller-drive phase difference (Δϕ(i_{S}, u₁)) and from a further predetermined phase difference (Δϕ_{S2}), wherein the current of a drive coil (8) is detected as a state variable (is) of the electromagnetic drive.

2. Method according to claim 1, **characterized in that** the predetermined phase difference (Δϕ_{S1}) is chosen so that the oscillation element (5) is excited to oscillatiom in at least one eigenform in resonance or near the resonance point.

3. Method according to any one of claims 1 or 2, **characterized in that** the electric setting device (3) provides a voltage (u_{S}) as electric excitation signal (u₂) for excitation of the electromagnetic drive (4), wherein the voltage (u_{S}) is applied, in particular, as a terminal voltage of a drive coil (8) of the electromagnetic drive (4).

4. Method according to any one of claims 1 to 3, **characterized in that** the determined controller-drive phase difference (Δϕ(i_{S}, u₁)) is filtered with a low pass filter (11), in particular with a low pass filter (11) with a time constant in a seconds range.

5. Method according to any one of claims 1 to 4, **characterized in that** for determining the controller-oscillation sensor phase difference (Δϕ(y, u₁))) and/or the controller-drive phase difference (Δϕ(i_{S}, u₁)) a harmonic base signal is generated from the controller (2) as a controller output signal (u₁), wherein the respective phase difference (Δϕ(y, u₁), Δϕ(i_{S}, u₁)) is determined by demodulating the respective signal of interest (y, is) with the harmonic base signal and a further harmonic base signal orthogonal thereto provided by the controller (2).

6. Resonance measuring system (1) in the form of a Coriolis mass flowmeter, wherein the resonance measuring system (1) comprises at least one controller (2), at least one electric setting device (3), at least one electromagnetic drive (4) as an oscillation generator, at least one oscillation element (5), and at least one oscillation sensor (6), wherein during operation of the resonance measuring system (1) the controller (2) generates a controller output signal (u₁) for setting the electric setting device (3), the electric setting device (3) generates an electric excitation signal (u₂) to excite the electromagnetic drive (4), the electromagnetic drive (4) excites the oscillation element (5) to oscillation in at least one eigenmode, and the excited oscillation of the oscillation element (5) is detected by the oscillation sensor (6) and is output as at least one output signal (y),
**characterized in**
**that** a control loop is implemented in such a way that the method according to any one of claims 1 to 5 can be executed by the resonance measuring system in a concrete manner.

7. Resonance measuring system (1) according to claim 6, **characterized in that** the electric setting device (3) is a voltage-controlled voltage converter.

## Revendications

1. Procédé de conduite d'un système (1) de mesure par résonance qui présente la forme d'un appareil de mesure de débit massique par effet Coriolis, le système (1) de mesure par résonance comportant un régulateur (2), au moins un dispositif électrique de réglage (3), au moins un entraînement électromagnétique (4) configuré comme générateur de vibrations, au moins un élément oscillant (5) et au moins un enregistreur de vibrations (6),
le régulateur (2) formant un signal (u₁) de sortie de régulateur qui commande le dispositif électrique de réglage (3),
le dispositif électrique de réglage (3) délivrant un signal électrique d'excitation (u₂) qui excite l'entraînement électromagnétique (4),
l'entraînement électromagnétique (4) excitant l'élément oscillant (5) pour qu'il oscille en au moins un mode propre, la vibration excitée sur l'élément oscillant (5) étant saisie par l'enregistreur de vibrations (6) sous la forme d'un ou de plusieurs signaux de sortie (y),
**caractérisé en ce que**
dans une boucle de régulation, le déphasage (Δϕ(y,u₁)) entre l'enregistreur de vibrations et le régulateur est saisi entre le signal de sortie (y) de l'enregistreur de vibrations (6) et le signal de sortie (u₁) du régulateur, un écart de réglage (e) est calculé à partir d'un déphasage (Δϕₛ₁) prédéterminé et du déphasage (Δϕ(y,u₁)) entre l'enregistreur de vibrations et le régulateur et l'écart de réglage (e) est appliqué sur le régulateur (2) en tant que signal d'entrée,
**en ce qu'**un déphasage (Δϕ(iₛ,u₁)) entre l'entraînement et le régulateur est déterminé entre une grandeur d'entrée (iₛ) de l'entraînement électromagnétique (4) et le signal (u₁) de sortie de régulateur et le déphasage (Δϕ(iₛ,u₁)) entre le régulateur et l'entraînement est utilisé comme déphasage (Δϕₛ₁) prédéterminé ou le déphasage prédéterminé (Δϕₛ₁) est calculé à partir du déphasage (Δϕ(iₛ,u₁)) entre le régulateur et l'entraînement et d'un autre déphasage prédéterminé (Δϕₛ₂), la grandeur d'état (iₛ) de l'entraînement électromagnétique étant le courant saisi sur une bobine d'entraînement (8).

2. Procédé selon la revendication 1, **caractérisé en ce que** le déphasage (Δϕₛ₁) prédéterminé est sélectionné de telle sorte que l'élément oscillant (5) soit excité à osciller en au moins un mode propre de résonance ou à proximité du point de résonance.

3. Procédé selon l'une des revendications 1 ou 2, **caractérisé en ce que** le dispositif électrique de réglage (3) délivre une tension (uₛ) comme signal électrique d'excitation (u₂) qui excite l'entraînement électromagnétique (4), la tension (uₛ) étant appliquée en particulier comme tension aux bornes d'une bobine d'entraînement (8) de l'entraînement électromagnétique (4).

4. Procédé selon l'une des revendications 1 à 3, **caractérisé en ce que** le déphasage (Δϕ(iₛ,u₁)) déterminé entre le régulateur et l'entraînement est filtré par un filtre passe-bas (11) et en particulier par un filtre passe-bas (11) dont la constante de temps est de l'ordre des secondes.

5. Procédé selon l'une des revendications 1 à 4, **caractérisé en ce que** pour déterminer le déphasage (Δϕ(y,u₁)) entre le régulateur et l'enregistreur de vibrations et/ou le déphasage (Δϕ(iₛ,u₁)) entre le régulateur et l'entraînement, un signal harmonique de base est formé par le régulateur (2) en tant que signal de sortie (u₁) du régulateur, le déphasage (Δϕ(y,u₁), (Δϕ(iₛ,u₁)) étant déterminé par démodulation du signal concerné (y, iₛ) avec le signal harmonique de base et un autre signal harmonique de base, perpendiculaire au premier, délivré par le régulateur (2).

6. Système (1) de mesure par résonance qui présente la forme d'un appareil de mesure de débit massique par effet Coriolis, le système (1) de mesure par résonance comportant un régulateur (2), au moins un dispositif électrique de réglage (3), au moins un entraînement électromagnétique (4) configuré comme générateur de vibrations, au moins un élément oscillant (5) et au moins un enregistreur de vibrations (6),
le régulateur (2) formant un signal (u₁) de sortie de régulateur qui commande le dispositif électrique de réglage (3),
le dispositif électrique de réglage (3) délivrant un signal électrique d'excitation (u₂) qui excite l'entraînement électromagnétique (4),
l'entraînement électromagnétique (4) excitant l'élément oscillant (5) pour qu'il oscille en au moins un mode propre, la vibration excitée sur l'élément oscillant (5) étant saisie par l'enregistreur de vibrations (6) sous la forme d'un ou de plusieurs signaux de sortie (y),
**caractérisé en ce que**
un circuit de régulation est mis en oeuvre de telle sorte que le système de mesure par résonance puisse exécuter concrètement le procédé selon l'une des revendications 1 à 5.

7. Système (1) de mesure par résonance selon la revendication 6, **caractérisé en ce que** le dispositif électrique de réglage (3) est un convertisseur de tension commandé en tension.
